# EUROPÄISCHE PATENTSCHRIFT

(11) **EP 1 130 560 B1**
(45) Veröffentlichungstag und Bekanntmachung des Hinweises auf die Patenterteilung: **18.10.2006**
(21) Anmeldenummer: 01103383.4
(22) Anmeldetag: 14.02.2001
(51) Int. Cl.: G08G 1/0968, G01C 21/36

(54) **Vorrichtung und Verfahren zum Betreiben eines Fahrzeugs**
Device and method for operating a vehicle
Dispositif et procédé pour fonctionnement d'un véhicule

(30) Priorität: 01.03.2000 DE 10009723
(43) Veröffentlichungstag der Anmeldung: 05.09.2001
(73) Patentinhaber: Delphi Technologies, Inc., Troy, MI 48098 (US)
(72) Erfinder: Lehmann, Reinhard, Grundig AG, 90741 Nürnberg (DE); Körber, Matthias, Grundig AG, 90741 Nürnberg (DE)
(74) Vertreter: Manitz, Finsterwald & Partner GbR

(56) Entgegenhaltungen:
- DE-A- 19 516 649
- US-A- 5 568 390
- US-A- 6 005 494

## Beschreibung

Die vorliegende Erfindung betrifft eine Vorrichtung und ein Verfahren zum Betreiben eines Fahrzeugs, um einen unbeabsichtigten vollständigen Verbrauch der Kraftstoffreserven des Fahrzeugs zu vermeiden.

Bei bekannten Fahrzeugen tritt immer wieder das Problem auf, daß die Fahrzeuge nicht mehr weiterbewegt werden können, weil die Kraftstoffreserven des Fahrzeugs verbraucht sind.

Um dies zu vermeiden weisen die bekannten Fahrzeuge Anzeigen auf, welche die noch vorhandenen Kraftstoffmengen anzeigen. Bei Erreichen einer vorgegebenen Mindestmenge wird der Benutzer des Fahrzeugs beispielsweise durch eine Wamleuchte darauf hingewiesen, daß diese Mindestmenge erreicht bzw. unterschritten wurde.

Die alleinige Anzeige der Restkraftstoffmenge hat sich jedoch als nicht ausreichend herausgestellt, weil es dem Benutzer eines mit einer Kraftstoffanzeige ausgestatteten Fahrzeug häufig an den nötigen Kenntnissen mangelt, um aus dieser Information abzuleiten, welche Fahrtstrecke er noch mit dem Fahrzeug zurücklegen kann, bevor der Kraftstoff vollständig verbraucht ist. Dadurch kommt es trotz der Kraftstoffanzeige immer noch zu dem eingangs geschilderten Problem, daß das Fahrzeug wegen des vollständigen Verbrauchs der Kraftstoffreserven nicht mehr weiterbewegt werden kann.

Dieses Problem ist bei bekannt gewordenen Fahrzeugen dadurch gelöst worden, daß zusätzlich zur Bestimmung und Anzeige der Restkraftstoffmenge auch eine Anzeige und Bestimmung des jeweiligen Kraftstoffverbrauchs bzw. des durchschnittlichen Kraftstoffverbrauchs erfolgt. Aus den Daten für Restkraftstoffmenge und Kraftstoffverbrauch bzw. durchschnittlichem Kraftstoffverbrauch kann dann die mit dem Fahrzeug mit der verbliebenen Restkraftstoffmenge noch zurücklegbare Strecke ermittelt und angezeigt werden.

Auch diese verbesserte Information des Benutzers des Fahrzeugs zeigt jedoch dann Schwächen, wenn der Benutzer vergißt neuen Kraftstoff nachzutanken oder die Anzeige nicht beachtet oder übersieht. Die verbesserte Information des Benutzers des Fahrzeugs zeigt darüber hinaus immer dann Schwächen, wenn der Benutzer das Fahrzeug in einem Gebiet bewegt, in dem er sich nicht gut auskennt. Unter diesen Umständen kann es passieren, daß trotz angezeigter mit der verbliebenen Restkraftstoffmenge noch zurücklegbaren Strecke keine Tankstelle mehr erreicht wird, weil der Benutzer nicht weiß, wo die nächste Tankstelle zu finden ist, bzw. nicht weiß, ob die nächste Tankstelle innerhalb des Radius der noch zurücklegbaren Strecke liegt.

Aus der DE 195 16 649 A und der US-A-5,568,390 sind Verfahren nach dem Oberbegriff des Anspruchs 1 bekannt. Es sind ebenfalls aus beiden Schriften Vorrichtungen zur Durchführung eines solchen Verfahrens bekannt, die jeweils ein Navigationssystem und einen Sensor zur Ermittlung einer im Fahrzeug vorhandenen Kraftstoffmenge umfassen.

Bei den bekannten Verfahren muss aber nach wie vor der Fahrer entscheiden, ob er eine Tankstelle ansteuern möchte. Auch die Auswahl einer Tankstelle bleibt dem Fahrer überlassen. Es besteht somit nach wie vor die Möglichkeit, dass der Fahrer sich gegen das Ansteuern einer Tankstelle entscheidet und der noch verbleibende Kraftstoff noch vor Erreichen einer Tankstelle zur Neige geht, so dass das Fahrzeug zum Stillstand kommt. Zudem ist der Fahrer nicht immer in der Lage, diejenige Tankstelle auszuwählen, die unter ökonomischen Gesichtspunkten zu bevorzugen wäre.

Es ist daher Aufgabe der vorliegenden Erfindung, eine Vorrichtung und ein Verfahren zum Betreiben eines Fahrzeugs anzugeben, welche es ermöglichen, einen unbeabsichtigten, vollständigen Verbrauch der Kraftstoffreserven des Fahrzeugs zuverlässiger zu vermeiden, als die bekannten Einrichtungen dies tun. Zudem soll der Fahrer bei der Fahrt zu einer möglichst günstig gelegenen Tankstelle unterstützt werden.

Diese Aufgabe wird gemäß der vorliegenden Erfindung durch ein Verfahren nach Anspruch 1 und eine Vorrichtung nach Anspruch 9 gelöst.

Bei der erfindungsgemäßen Vorrichtung und bei dem erfindungsgemäßen Verfahren zum Betreiben eines Fahrzeugs wird dabei von der Überlegung ausgegangen, daß neben einer Bestimmung einer noch verbleibenden Restkraftstoffmenge und einer mit dieser Restkraftstoffmenge noch zurücklegbaren Strecke, zusätzlich die innerhalb der noch zurücklegbaren Strecke liegenden Tankstellen mittels eines Navigationssystems ermittelt werden und dem Benutzer des Fahrzeugs angezeigt werden.

Der Vorteil des erfindungsgemäßen Verfahrens bzw. der erfindungsgemäßen Vorrichtung ist darin zu sehen, daß es durch die Anzeige der innerhalb der noch zurücklegbaren Strecke liegenden Tankstellen sicher vermieden werden kann, daß das Fahrzeug wegen Kraftstoffmangels nicht mehr weiterbewegt werden kann. Durch die Anzeige der Fahrtroute zu der oder den nächst gelegenen Tankstellen mittels des Navigationssystems ist es dem Benutzer des Fahrzeugs zudem auch in ihm nicht bekannten Gebieten möglich, immer rechtzeitig eine Tankstelle aufzusuchen.

Weitere Vorteile der vorliegenden Erfindung ergeben sich aus den abhängigen Ansprüchen sowie der nachfolgenden Beschreibung von Ausführungsbeispielen einer erfindungsgemäßen Vorrichtung anhand von Figuren.

Es zeigt:
- Fig. 1: ein erstes Ausführungsbeispiel einer erfindungsgemäßen Vorrichtung zum Betreiben eines Fahrzeugs mit einem Navigationssystem, und
- Fig. 2: ein zweites Ausführungsbeispiel einer erfindungsgemäßen Vorrichtung zum Betreiben eines Fahrzeugs mit einem Navigationssystem und einem Bordcomputer.

Zur Erleichterung des Verständnisses der vorliegenden Erfindung sind in den Figuren nur die Bestandteile der Ausführungsbeispiele dargestellt, die im Zusammenhang mit der Erfindung von Bedeutung sind. Gleiche Bestandteile in den Figuren weisen gleiche Bezugszeichen auf.

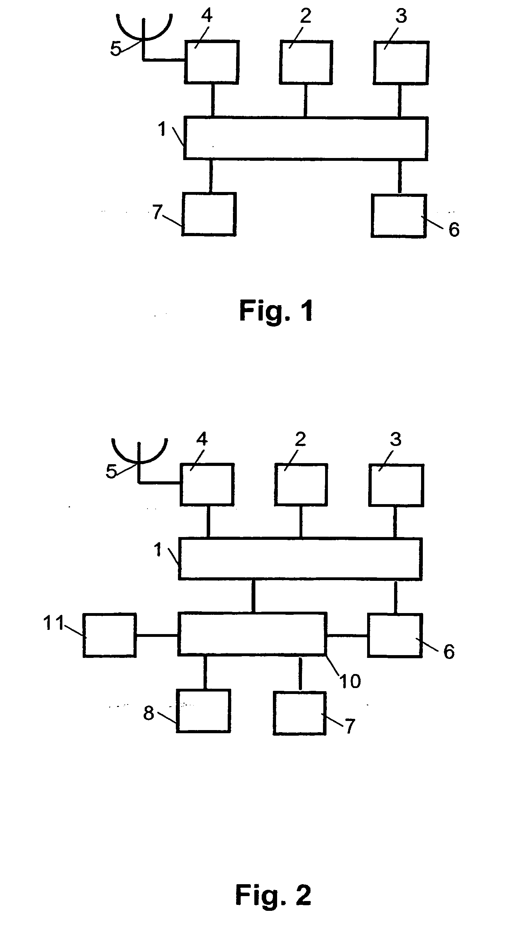

Figur 1 zeigt ein erstes Ausführungsbeispiel einer erfindungsgemäßen Vorrichtung zum Betreiben eines Fahrzeugs mit einem Navigationssystem.

Das Navigationssystem weise eine Navigationseinrichtung 1 auf, die beispielsweise von einem Mikroprozessor mit zugehörigem Speicher sowie Steuerungs- und Auswertesoftware gebildet wird. An die Navigationseinrichtung 1 ist ein Speicher 2 mit großem Speichervolumen angeschlossen, welches dazu geeignet ist, Daten austauschbarer Speichermedien zu verarbeiten und mit der Navigationseinrichtung 1 auszutauschen. Der Speicher kann beispielsweise von einem CD-ROM-Gerät und zugehöriger CD-ROM als Speichermedium gebildet werden. Auf dem Speichermedium sind in digitalisierter Form Daten gespeichert, die zur Navigation benötigt werden, z. B. digitalisierte Straßenkarten sowie weitere Hinweise, die für den Benutzer des Navigationssystems im Zusammenhang mit dem Auffinden bestimmter Ziele von Bedeutung sein können. Derartige Hinweise können beispielsweise Informationen über die Lage von bestimmten Hotels, Museen, Tankstellen, Parkplätzen, Reparaturwerkstätten usw. sein. Damit die Hinweise sowohl für den Benutzer als auch für die Navigationseinrichtung 1 auswertbar sind, werden die Hinweise sowohl in alphanumerischer Form, z. B. Name und Anschrift eines bestimmten Hotels, als auch als entsprechende Markierung in den digitalisierten Straßenkarten gespeichert.

An die Navigationseinrichtung 1 ist außerdem eine Ein- und Ausgabeeinrichtung 3 angeschlossen, die z. B. von einem LC-Display sowie einer Tastatur oder einer berührungsempfindlichen Anzeige (Touch-Screen) gebildet werden kann. Mittels der Ein- und Ausgabeeinrichtung 3 kann ein Benutzer beispielsweise ein gewünschtes Ziel eingeben, zu dem die Navigationseinrichtung 1 eine vorteilhafte Fahrtroute bestimmen soll. Die Anweisungen an den Benutzer hinsichtlich der bestimmten Fahrtroute erfolgen dann vermittels der Ein- und Ausgabeeinrichtung 3, z. B. mittels der Darstellung von Pfeilen, welche die jeweilige Fahrtrichtung angeben. Die Ein- und Ausgabeeinrichtung 3 kann neben der optischen Anzeige mittels z. B. LC-Display zusätzlich, oder aus Sicherheitsgründen während der Fahrt ausschließlich, akustische Anweisungen erteilen, z. B. daß an der nächsten Kreuzung rechts abgebogen werden muß. Zur akustischen Anzeige verfügt die Navigationseinrichtung 1 beispielsweise über einen Sprachsynthesizer dessen Informationen mittels in der Ein- und Ausgabeeinrichtung 3 vorhandenem Verstärker und Lautsprecher ausgegeben werden. An Stelle separater Verstärker und Lautsprecher kann auch Gebrauch von einem Autoradio oder Audiosystem gemacht werden, das ohnehin im Fahrzeug vorhanden ist.

Um mittels der digitalen Straßenkarten im Speicher 2 entsprechende Fahrtrouten sowie die jeweilige Position des Fahrzeugs bestimmen zu können, sind an die Navigationseinrichtung 1 außerdem Positionssensoren 4, 5, 6 angeschlossen. Die Auswertung der Signale der Positionssensoren 4, 5, 6 durch die Navigationseinrichtung 1 erlaubt die Bestimmung der jeweiligen Position des Fahrzeugs sowie der Fahrtroute zum gewünschten Ziel. Die Positionssensoren 4, 5, 6 umfassen zumindest Radsensoren 6. Zusätzlich können weitere Positionssensoren 4, 5 vorgesehen sein, welche beispielsweise eine satellitengestützte Navigation erlauben. Die Positionssensoren 4, 5 umfassen dann eine Antenne 5 zum Empfang von Satellitensignalen und eine Auswerteeinrichtung 4, welche eine Positionsbestimmung aus den Satellitensignalen vornimmt. Derartige Positionssensoren sind beispielsweise unter der Bezeichnung Global Positioning System (GPS) bekannt.

An die Navigationseinrichtung 1 ist darüber hinaus ein Kraftstoffsensor 7 angeschlossen, dessen Signale Rückschlüsse über die noch im Fahrzeug vorhandene Restkraftstoffmenge erlauben. Der Kraftstoffsensor 7 kann beispielsweise der in Fahrzeugen ohnehin vorhandene Sensor sein, der für eine üblicherweise im Armaturenbrett von Fahrzeugen vorhandene Tankanzeige verwendet wird.

Die Navigationseinrichtung 1 wertet die Signale des Kraftstoffsensors 7 aus und bei Unterschreiten eines vorgegebenen oder vom Benutzer vorgebbaren Grenzwerts für die Restkraftstoffmenge, der im Speicher der Navigationseinrichtung 1 gespeichert ist, wird von der Navigationseinrichtung 1 ein Warnsignal erzeugt und mittels der Ein- und Ausgabeeinrichtung 3 z. B. als optischer und/oder akustischer Hinweis ausgegeben. Dabei kann dem Benutzer mitgeteilt werden, daß die Restkraftstoffmenge beispielsweise nur noch für 50 km Fahrstrecke ausreicht. Die maximal mit der Restkraftstoffmenge noch zurücklegbare Fahrstrecke kann beispielsweise dadurch ermittelt werden, daß die Restkraftstoffmenge durch einen bekannten Durchschnittsverbrauch für das jeweilige Fahrzeug, der im Speicher der Navigationseinrichtung 1 werksseitig oder vom Benutzer gespeichert werden kann, geteilt wird. Ist beispielsweise ein Wert von 5 l als Grenzwert für die Restkraftstoffmenge und ein Durchschnittsverbrauch von 10 l pro 100 km vorgegeben und im Speicher der Navigationseinrichtung 1 gespeichert, ergibt sich bei der Berechnung durch die Navigationseinrichtung 1, daß die Restkraftstoffmenge noch für 50 km Fahrstrecke ausreicht.

Auf das Warnsignal hin kann der Benutzer beispielsweise eine Taste der Ein- und Ausgabeeinrichtung 3 betätigen, woraufhin die Navigationseinrichtung 1, falls sie zu diesem Zeitpunkt in Betrieb ist, abweichend vom ursprünglich gewünschten Ziel eine neue Fahrtroute bestimmt, welche zur nächsten Tankstelle führt. Nachdem das Fahrzeug betankt wurde und der Kraftstoffsensor 7 entsprechende Signale an die Navigationseinrichtung 1 liefert oder entsprechend vom Benutzer zurückgesetzt wird, wird eine Fahrtroute bestimmt, welche zum ursprünglich gewünschten Ziel führt. Die Fahrtroute zur nächsten Tankstelle wird dabei von der Navigationseinrichtung 1 so bestimmt, daß die Abweichung von der Fahrtroute zum ursprünglich gewählten Ziel so klein wie möglich ist. Liegen mehrere Tankstellen innerhalb des Radius der mit der Restkraftstoffmenge noch zurücklegbaren Strecke, wird die Tankstelle ausgewählt, welche den geringsten Umweg im Hinblick auf die Fahrtroute zum ursprünglich gewünschten Ziel verursacht.

Figur 2 zeigt ein zweites Ausführungsbeispiel einer erfindungsgemäßen Vorrichtung zum Betreiben eines Fahrzeugs mit einem Navigationssystem.

Das Navigationssystem weist eine Navigationseinrichtung 1 auf, an die ein Speicher 2, beispielsweise ein CD-ROM-Gerät mit zugehöriger CD-ROM als Speichermedium, eine Ein- und Ausgabeeinrichtung 3 sowie Sensoren 4, 5, 6 zur Erfassung der jeweiligen Position des mit dem Navigationssystem ausgerüsteten Fahrzeugs angeschlossen sind.

Der Aufbau der Navigationseinrichtung 1 sowie der an die Navigationseinrichtung 1 angeschlossenen Bestandteile 2 bis 6 entspricht dem Aufbau der Navigationseinrichtung 1 sowie der an die Navigationseinrichtung 1 angeschlossenen Bestandteile 2 bis 6 des ersten Ausführungsbeispiels nach Figur 1.

Zusätzlich ist an die Navigationseinrichtung 1 ein Bordcomputer 10 angeschlossen. Der Bordcomputer 10 ist Bestandteil des Fahrzeugs und verarbeitet Daten die bei dem Betrieb des Fahrzeugs anfallen. Diese Daten oder eine bestimmte Auswahl davon kann mittels Anzeigeeinrichtungen 11 dargestellt werden. Die Anzeigevorrichtungen 11 sind dabei die üblicherweise im Armaturenbrett des Fahrzeugs vorhandenen Anzeigen wie Tachometer, Tankuhr usw. Der Bordcomputer 10 verarbeitet dazu Daten und Signale von an ihn angeschlossenen Sensoren 6, 7, 8. Diese Sensoren 6, 7, 8 umfassen beispielsweise Radsensoren 6, zur Bestimmung von Geschwindigkeit und zurückgelegter Strecke, einen Kraftstoffsensor 7, dessen Signale Rückschlüsse über die noch im Fahrzeug vorhandene Restkraftstoffmenge erlauben und ein Motormanagementsystem 8. Das Motormanagementsystem 8 steuert den im Fahrzeug vorhandenen Motor, beispielsweise dessen Zünd- und Einspritzanlage. Aus den Daten des Motormanagementsystems 8 läßt sich somit eine Angabe darüber ableiten, wie hoch der jeweilige, aktuelle Kraftstoffverbrauch ist oder wie hoch der Kraftstoffverbrauch z. B. der letzten 100 km war.
Die Navigationseinrichtung 1 wertet die Signale des Bordcomputers 10 hinsichtlich noch zur Verfügung stehender Restkraftstoffmenge und aktuellem Verbrauch bzw. Druchschnittsverbrauch aus. Bei Unterschreiten eines vorgegebenen oder vom Benutzer vorgebbaren Grenzwerts für die Restkraftstoffmenge, der im Speicher der Navigationseinrichtung 1 gespeichert ist, wird von der Navigationseinrichtung 1 ein Warnsignal erzeugt und mittels der Ein- und Ausgabeeinrichtung 3 z. B. als optischer und/oder akustischer Hinweis ausgegeben. Dabei kann dem Benutzer mitgeteilt werden, daß die Restkraftstoffmenge beispielsweise nur noch für 50 km Fahrstrecke ausreicht. Die maximal mit der Restkraftstoffmenge noch zurücklegbare Fahrstrecke kann beispielsweise dadurch ermittelt werden, daß die Restkraftstoffmenge durch den vom Bordcomputer 10 ermittelten Durchschnittsverbrauch geteilt wird. Ist beispielsweise ein Wert von 5 l als Grenzwert für die Restkraftstoffmenge vorgegeben und im Speicher der Navigationseinrichtung 1 gespeichert und wird ein Durchschnittsverbrauch von 10 l pro 100 km durch den Bordcomputer 10 ermittelt, ergibt sich bei der Berechnung durch die Navigationseinrichtung 1, daß die Restkraftstoffmenge noch für 50 km Fahrstrecke ausreicht.

Auf das Warnsignal hin kann der Benutzer beispielsweise eine Taste der Ein- und Ausgabeeinrichtung 3 betätigen, woraufhin die Navigationseinrichtung 1, falls sie zu diesem Zeitpunkt in Betrieb ist, abweichend vom ursprünglich gewünschten Ziel eine neue Fahrtroute bestimmt, welche zur nächsten Tankstelle führt. Nachdem das Fahrzeug betankt wurde und der Kraftstoffsensor 7 entsprechende Signale an die Navigationseinrichtung 1 liefert oder entsprechend vom Benutzer zurückgesetzt wird, wird eine Fahrtroute bestimmt, welche zum ursprünglich gewünschten Ziel führt. Die Fahrtroute zur nächsten Tankstelle wird dabei von der Navigationseinrichtung 1 so bestimmt, daß die Abweichung von der Fahrtroute zum ursprünglich gewählten Ziel so klein wie möglich ist. Liegen mehrere Tankstellen innerhalb des Radius der mit der Restkraftstoffmenge noch zurücklegbaren Strecke, wird die Tankstelle ausgewählt, welche den geringsten Umweg im Hinblick auf die Fahrtroute zum ursprünglich gewünschten Ziel verursacht.
Abweichend von der obigen Beschreibung kann es auch vorgesehen sein, daß die Signale der Radsensoren 6 nur vom Bordcomputer 10 ausgewertet werden und entsprechende Daten der Navigationseinrichtung 1 zur Verfügung gestellt werden. Ebenso ist es möglich, die Anzeigeeinrichtungen 11 und Ein- und Ausgabeeinrichtung 3 in einer gemeinsamen Einheit zusammenzufassen.

Der für beide Ausführungsbeispiele oben beschriebene Anschluß der Navigationseinrichtung 1 insbesondere an die Sensoren 6, 7, 8 und/oder den Bordcomputer 10 kann mittels eines im Fahrzeug vorhandenen Datenbusses erfolgen. Der dazu verwendete Datenbus kann beispielsweise eine CAN-Bus sein.

Darüber hinaus sind weitere Abweichungen vom oben beschriebenen Aufbau möglich. So ist es möglich, daß andere als die beschriebenen Fahrzeugsensoren verwendet werden, um die zur Bestimmung der Restkraftstoffmenge bzw. der noch zurücklegbaren Strecke erforderlichen Daten zu erhalten.

Abweichungen sind auch von der oben beschriebenen Vorgehensweise der Lenkung des Benutzers möglich. So ist es möglich, daß die Navigationseinrichtung 1 beispielsweise immer die nächst gelegene Tankstelle anzeigt.

Ein solches Verfahren liegt nicht im Rahmen der Erfindung, für die Schutz beansprucht wird.

Schließlich kann ein Mode vorgesehen sein, bei dem die Navigationseinrichtung 1 nur noch den Weg zur nächsten Tankstelle anzeigt und dies nicht - wie oben beschreiben - der Auswahl des Benutzers überläßt. Dieser Mode wird immer dann aktiviert, wenn die Navigationseinrichtung 1 feststellt, daß mit der verbleibenden Restkraftstoffmenge nur noch eine einzige Tankstelle erreicht werden kann. In Diesem Fall bleiben alle oben erläuterten Optionen und Optimierungen unberücksichtigt.

In einer anderen Weiterbildung kann es vorgesehen sein, daß an die Navigationseinrichtung 1 eine Kommunikationseinrichtung angeschlossen ist, über die aktuelle Informationen übertragen werden können, welche von der Navigationseinrichtung 1 bei der Bestimmung von Fahrtrouten berücksichtigt werden. Dazu kann als Kommunikationseinrichtung beispielsweise eine Mobiltelefon oder ein Rundfunkempfänger, der Zusatzdaten auswerten kann, z.B. ein RDS-Empfänger mit TMC-Funktion, verwendet werden. Dann ist es möglich Tankstellen, die momentan geschlossen sind, z. B. wegen Bauarbeiten, nicht zu berücksichtigen.

## Patentansprüche

1. Verfahren zum Betreiben eines Fahrzeugs, um einen unbeabsichtigten vollständigen Verbrauch der Kraftstoffreserven des Fahrzeugs zu vermeiden, mit nachfolgenden Verfahrensschritten:
- Ermittlung der im Fahrzeug vorhandenen Kraftstoffreserven,
- Vergleich des Werts der ermittelten Kraftstoffreserven mit einer Mindestmenge,
**dadurch gekennzeichnet,**
**dass** eine Fahrtroute zu einer Tankstelle ermittelt wird, wenn festgestellt wird, dass die ermittelten Kraftstoffreserven die Mindestmenge unterschreiten,
wobei die Fahrtroute zu einer Tankstelle derart festgelegt wird, dass eine Abweichung von einer vorher festgelegten Fahrtroute minimiert wird.

2. Verfahren nach Anspruch 1,
**dadurch gekennzeichnet,**
**dass** mittels eines Wertes für den Kraftstoffverbrauch des Fahrzeugs eine Strecke ermittelt wird, die das Fahrzeug mit der ermittelten Kraftstoffmenge maximal noch zurücklegen kann, und
die Ermittlung der Fahrtroute zu einer Tankstelle in Abhängigkeit von der maximal zurücklegbaren Strecke erfolgt.

3. Verfahren nach Anspruch 2,
**dadurch gekennzeichnet,**
**dass** der den Kraftstoffverbrauch kennzeichnende Wert vorgegeben oder vorgebbar ist.

4. Verfahren nach Anspruch 2,
**dadurch gekennzeichnet,**
**dass** der den Kraftstoffverbrauch kennzeichnende Wert bei Betrieb des Fahrzeugs ermittelt wird.

5. Verfahren nach einem der vorstehenden Anspruch,
**dadurch gekennzeichnet,**
**dass** ein Wert für die Mindestmenge des Kraftstoffs vorgegeben oder vorgebbar ist.

6. Verfahren nach einem der vorstehenden Ansprüche,
**dadurch gekennzeichnet,**
**dass** weitere Fahrtrouten zu einer Tankstelle ermittelt werden, falls die zuerst angebotene Fahrtroute oder Fahrtrouten nicht berücksichtigt werden.

7. Verfahren nach einem der vorstehenden Ansprüche,
**dadurch gekennzeichnet,**
**dass** eine Fahrtroute zur nächst gelegenen Tankstelle ermittelt wird, wenn außer dieser keine weiteren Tankstellen mit den noch vorhandenen Kraftstoffreserven erreicht werden können.

8. Vorrichtung zum Betreiben eines Fahrzeugs, um einen unbeabsichtigten vollständigen Verbrauch der Kraftstoffreserven des Fahrzeugs zu vermeiden, mit
einem Navigationssystem (1 bis 6), und
einem Sensor (7) zur Ermittlung einer im Fahrzeug vorhandenen Kraftstoffmenge,
**dadurch gekennzeichnet,**
**dass** die Vorrichtung Mittel zum Vergleichen des Werts der ermittelten Kraftstoffreserven mit einer Mindestmenge umfasst, und
das Navigationssystem (1 bis 6) Mittel zur Ermittlung einer Fahrtroute zu einer Tankstelle umfasst, wobei diese Mittel so ausgestaltet sind, daß sie, die Fahrtroute zu einer Tankstelle derart festlegen, dass eine Abweichung von einer vorher festgelegten Fahrtroute minimiert wird.

## Claims

1. A method of operating a vehicle to avoid unintentional complete consumption of the fuel reserves of the vehicle comprising the following method steps:
- determination of the fuel reserves present in the vehicle,
- comparison of the value of the fuel reserves determined with a minimum amount,
**characterised in that**
a travel route to a petrol station is determined if it is found that the fuel reserves determined are below the minimum amount,
wherein the travel route to a petrol station is fixed such that a deviation from a previously determined travel route is minimised.

2. A method in accordance with claim 1, **characterised in that** a distance is determined by means of a value for the fuel consumption of the vehicle which the vehicle can cover at a maximum with the fuel amount determined; and **in that** the determination of the travel route to a petrol station takes place in dependence on the maximum distance which can be covered.

3. A method in accordance with claim 2, **characterised in that** the value characterising the fuel consumption is preset or presettable.

4. A method in accordance with claim 2, **characterised in that** the value characterising the fuel consumption is determined in the operation of the vehicle.

5. A method in accordance with any one of the preceding claims, **characterised in that** a value for the minimum amount of the fuel is preset or presettable.

6. A method in accordance with any one of the preceding claims, **characterised in that** further travel routes to a petrol station are determined if the travel route or routes first presented are not taken into account.

7. A method in accordance with any one of the preceding claims, **characterised in that** a travel route to the next closest petrol station is determined if no further petrol stations except this one can be reached with the fuel reserves still present.

8. An apparatus for the operation of a vehicle to avoid unintentional complete consumption of the fuel reserves of the vehicle comprising a navigation system (1 to 6); and
a sensor (7) for the determination of a fuel amount present in the vehicle,
**characterised in that**
the apparatus includes means for the comparing of the value of the fuel reserves determined with a minimum amount; and
the navigation system (1 to 6) includes means for the determination of a travel route to a petrol station, with these means being designed such that they fix the travel route to a petrol station such that a deviation from a previously fixed travel route is minimised.

## Revendications

1. Procédé d'utilisation d'un véhicule permettant d'éviter un épuisement involontaire total des réserves de carburant du véhicule, comprenant les étapes de procédé suivantes:
- la détermination des réserves de carburant disponibles dans le véhicule,
- la comparaison de la valeur des réserves de carburant ainsi déterminées avec une quantité minimale,
**caractérisé en ce que**
on détermine un itinéraire vers une station service lorsqu'on constate que les réserves de carburant déterminées tombent en dessous de la quantité minimale,
l'itinéraire vers la station service étant défini de manière telle qu'un écart par rapport à l'itinéraire préalablement arrêté soit réduit à un minimum.

2. Procédé selon la revendication 1, **caractérisé en ce que**, à partir d'une valeur de la consommation de carburant du véhicule, on détermine une distance maximale que le véhicule peut encore parcourir avec la quantité de carburant déterminée,
et qu'on détermine l'itinéraire vers une station service en fonction de la distance maximale pouvant encore être parcourue.

3. Procédé selon la revendication 2, **caractérisé en ce que** la valeur indiquant la consommation de carburant est prédéfinie ou peut être prédéfinie.

4. Procédé selon la revendication 2, **caractérisé en ce que** la valeur indiquant la consommation de carburant est déterminée durant le fonctionnement du véhicule.

5. Procédé selon l'une des revendications précédentes, **caractérisé en ce que** la valeur indiquant la quantité minimale de carburant est prédéfinie ou peut être prédéfinie.

6. Procédé selon l'une des revendications précédentes, **caractérisé en ce que** d'autres itinéraires vers des stations service seront déterminées, si le ou les itinéraire(s) initialement proposé(s) n'est/ne sont pas pris en compte.

7. Procédé selon l'une des revendications précédentes, **caractérisé en ce qu'**un itinéraire vers la station service la plus proche est déterminé, si, en dehors de celle-ci, aucune autre station service ne peut être atteinte avec les réserves de carburant encore disponibles.

8. Dispositif permettant l'utilisation d'un véhicule, destiné à éviter l'épuisement involontaire total des réserves de carburant du véhicule, comprenant
un système de navigation (1 à 6), et
un détecteur (7) permettant de déterminer une quantité de carburant disponible dans un véhicule,
**caractérisé en ce que**
le dispositif comporte des moyens de comparaison entre la valeur des réserves de carburant déterminées et une quantité minimale, et que
le système de navigation (1 à 6) comprend des moyens de détermination d'un itinéraire vers une station service, ces moyens étant configurés de manière telle qu'ils définissent l'itinéraire vers une station service de façon telle que l'écart par rapport à un itinéraire préalablement défini soit réduit à un minimum.
